# EUROPEAN PATENT SPECIFICATION

(11) **EP 2 416 487 B1**
(45) Date of publication and mention of the grant of the patent: **15.08.2018**
(21) Application number: 11158460.3
(22) Date of filing: 16.03.2011
(51) Int. Cl.: H02M 7/48, H02M 1/00, H02M 1/32

(54) **Electric power converting system**
Elektrisches Stromwandlersystem
Système de conversion de puissance électrique

(30) Priority: 17.03.2010 JP 2010061028
(43) Date of publication of application: 08.02.2012
(73) Proprietor: Fuji Electric Co., Ltd., Kawasaki-shi Kanagawa (JP)
(72) Inventor: Hida, Tetsuo, Shinagawa-ku Tokyo 141-0032 (JP)
(74) Representative: MERH-IP Matias Erny Reichl Hoffmann Patentanwälte PartG mbB

(56) References cited:
- EP-A2- 1 029 732
- CN-A- 101 272 928
- JP-A- 2007 181 331
- JP-A- 2008 017 586
- US-A- 5 170 105
- US-A- 5 619 107

## Description

### 1. Field of the Invention

The present invention relates to an electric converting system formed by a plurality of sets of inverters to which electric power is supplied from a common DC electric power supply and which can be operated independently of one another.

### 2. Background Art

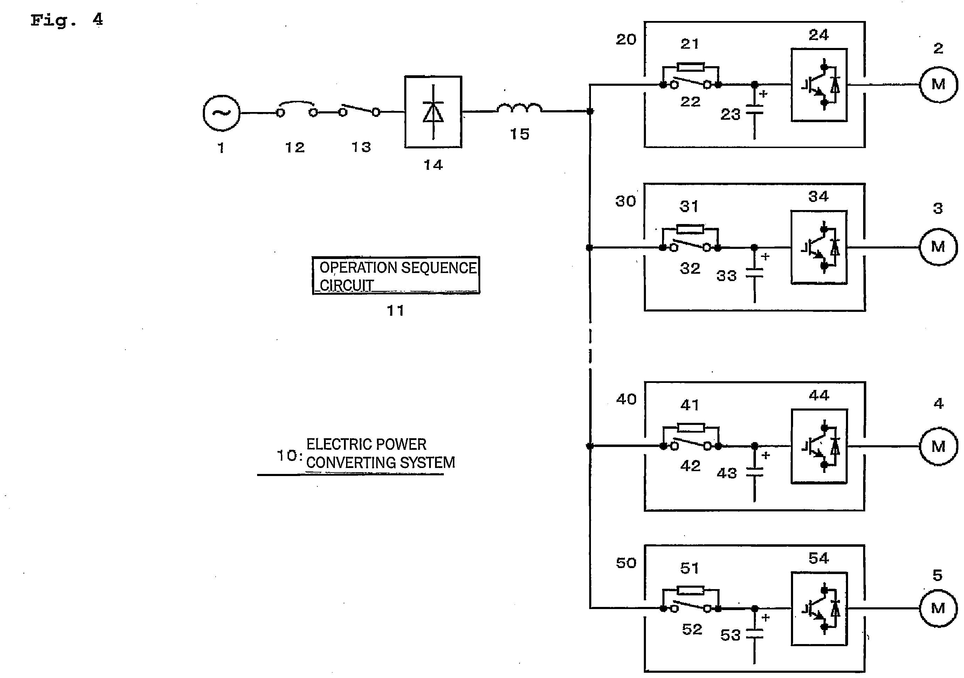

FIGURE 4 is a diagram showing a circuit configuration of an example of a related electric power converting system of this kind (see JP-A-2007-181331, for example).

In the diagram, reference numeral 1 denotes an AC power supply such as a commercial power supply and reference numerals 2 to 5 denote AC motors as loads to each of which electric power is supplied from an electric power converting system 10.

The electric power converting system 10 shown in FIG. 4 is formed of an operation sequence circuit 11 conducting the whole operation sequences of the electric power converting system 10, a master disconnecting switch 12, an electromagnetic contactor 13, a converter 14 with diodes in bridge connection, a DC reactor 15 for smoothing the output voltage of the converter 14 and inverter units 20, 30, 40 and 50 as a plurality of sets of inverters.

The inverter units 20, 30, 40 and 50 are formed of capacitors 23, 33, 43 and 53, charging current suppressing resistors 21, 31, 41 and 51, electromagnetic contactors 22, 32, 42 and 52 and inverter circuits 24, 34, 44 and 54, respectively.

Each of the capacitors 23, 33, 43 and 53 is made of a capacitor such as an electrolytic capacitor for smoothing the output voltage of the converter 14, the charging current suppressing resistor 21, 32, 41 and 51 suppress inrush currents to the capacitors 23, 33, 43 and 53, respectively, the electromagnetic contactors 22, 32, 42 and 52 are connected in parallel to the charging current suppressing resistor 21, 32, 41 and 51, respectively, and each of the inverter circuits 24, 34, 44 and 54 outputs an AC voltage with a desired amplitude and frequency with inverse-parallel connection circuits, in each of which an IGBT (Insulated Gate Bipolar Transistor) and a diode are connected in inverse-parallel, arranged in bridge connection.

The AC motors 2 to 5 to which electric power is supplied by the electric power converting system 10 shown in FIG. 4 are made available for power sources such as driving sources for conveying line equipment in iron-manufacturing machinery or paper-manufacturing machinery.

[Patent Document 1] JP-A-2007-181331

In an electric power converting system such as the electric power converting system 10 shown in FIG. 4 formed with a plurality of sets of inverters whose electric power is supplied from a common DC electric power supply and which can be operated independently of one another, as is disclosed in JP-A-2007-181331, for example, various kinds of measures are taken against the case when any one of a plurality of the sets of inverters causes failure so that no malfunction due to the failure affects other sound inverters.

Moreover, when any one of a plurality of the sets of inverters causes a failure to be brought into a state in which the operation of the failed inverter is stopped, it is required that the failed inverter can be immediately replaced by an inverter that can be normally operated.

In spite of such a requirement, however, in the related electric power converting system 10 shown in FIG. 4, when any one of the inverter units 20, 30, 40 and 50 causes a failure to be brought into a state in which the operation of the failed inverter unit is stopped, the failed inverter unit is replaced by an inverter that can be normally operated with replacement operations carried out as follows with the operation of the whole electric power converting system 10 made stopped. First, by the instruction from the operation sequence circuit 11, the electromagnetic contactor 13 is opened and, along with this, the operation of the whole electric power converting system 10 is made stopped. Thereafter, with the master disconnecting switch 12 being made opened, the failed inverter unit is made disconnected before a normal inverter unit is connected.

Thus, the related electric power converting system 10 has a problem in that the operation of the whole electric power converting system must be made stopped. In particular, in the case in which the subject machinery is that in a line control system in iron-manufacturing or in paper-manufacturing, this is to cause tremendous losses. Furthermore, in such an inverter replacement operation, there was also a problem in that the replacement operation requires a certain time because it is necessary to wait for a time to elapse until charges remaining in the respective capacitors forming sound inverter units are sufficiently discharged.

US 5 170 105 A describes a method for determining operability of a dynamic braking system in an electrically propelled traction vehicle by cycling selected switching devices while the vehicle is at rest and measuring voltages and currents generated in response to operation of the switching devices. In one form, the dynamic braking system is operated to be connected to a power conversion system of the vehicle and the voltage developed at the braking system compared to the voltage coupled to the vehicle. Using prior knowledge of system resistances, calculated ideal values of voltage are compared to measured values to confirm proper system operation. Malfunctions of particular components are logically determined by ratios of measured to ideal values and by operation of selected ones of the switching devices.

EP 1 029 732 A2 describes an apparatus for driving and controlling a car having a large gear directly connected to a wheel shaft of the car, small gears meshing with the large gear, AC motors connected to the small gears, respectively, and inverters whose AC output sides are connected to the AC motors, respectively, and whose DC input sides are connected in series in multiple stages to a high-voltage DC power source. Torque for driving the large gear connected to the wheel shaft is divided and borne by the small gears, so that each small gear receives small torque. This enables each tooth of each gear to have small mechanical strength. As a result, the cross-sectional area of each tooth of each small gear can be reduced to increase the number of teeth of the large gear that meshes with the small gears, to increase a gear ratio defined by the large and small gears.; The DC input terminals of the inverters are connected in series to the high-voltage DC power source, and a DC input voltage for each inverter is reduced to a standard inverter level.

JP 2008 017586 A describes a parallel system in which outputs of multiple auxiliary power supply devices are connected carrying out control as follows: A filter capacitor voltage is detected; and when the detected voltage reaches a preset condition, an output control command is amplified.

CN 101 272 928 A describes an electric car control apparatus comprising a smoothing capacitor that is charged from a DC power supply via a charging resistor; an inverter that converts the DC power charged in the smoothing capacitor to an AC power and supplies the AC power to a load; and a discharging switch that causes the voltage charged in the smoothing capacitor to be discharged via a discharging resistor. In the electric car control apparatus, the same resistor is used as the charging and discharging resistors. The electric car control apparatus includes a main switch, which is inserted in a main circuit to which the DC power is supplied by the DC power supply, and an auxiliary switch that is connected in parallel to the discharging switch and performs the opposite opening/closing operations to the main switch.

US 5 619 107 A describes a device for controlling an electric vehicle motor that optimally discharges a smoothing capacitor, connected to the input terminals of an inverter in accordance with the condition of an electric vehicle. The device includes a motor drive means, the smoothing capacitor connected in parallel with the motor drive means, switching means operating in connection with an operation switch operated by the vehicle operator, discharging means for discharging the smoothing capacitor, draw detecting means, and discharge restricting means. The system opens the switching means to shut off output from the battery and to discharge the smoothing capacitor when the switching means is open, but restricts discharging during a towing or drawing condition of the electric vehicle.

Accordingly, it is an object of the present invention to provide an electric power converting system in which the above explained problems are solved.

### SUMMARY OF THE INVENTION

This object is achieved by the subject-matter according to independent claim 1. The dependent claim refers to a preferred embodiments of the invention.

According to the invention in an electric power converting system of this kind, when any one of a plurality of the sets of inverters causes a failure, the failed inverter can be safely and immediately replaced by an inverter that can be normally operated without stopping the operation of the whole electric power converting system.

### BRIEF DESCRIPTION OF THE DRAWINGS

FIG. 1 is a diagram showing the circuit configuration of an example of an electric power converting system according to the invention;
FIG. 2 is a flowchart illustrating the steps of a preliminary operation in removing a failed inverter unit in the electric power converting system shown in FIG. 1;
FIG. 3 is a flowchart illustrating the steps of a preliminary operation in mounting a sound inverter unit after the removal of the failed inverter unit and making the sound inverter unit start an operation in the electric power converting system shown in FIG. 1; and
FIG. 4 is a diagram showing a circuit configuration of an example of a related electric power converting system.

### DESCRIPTION OF THE PREFERRED EMBODIMENT

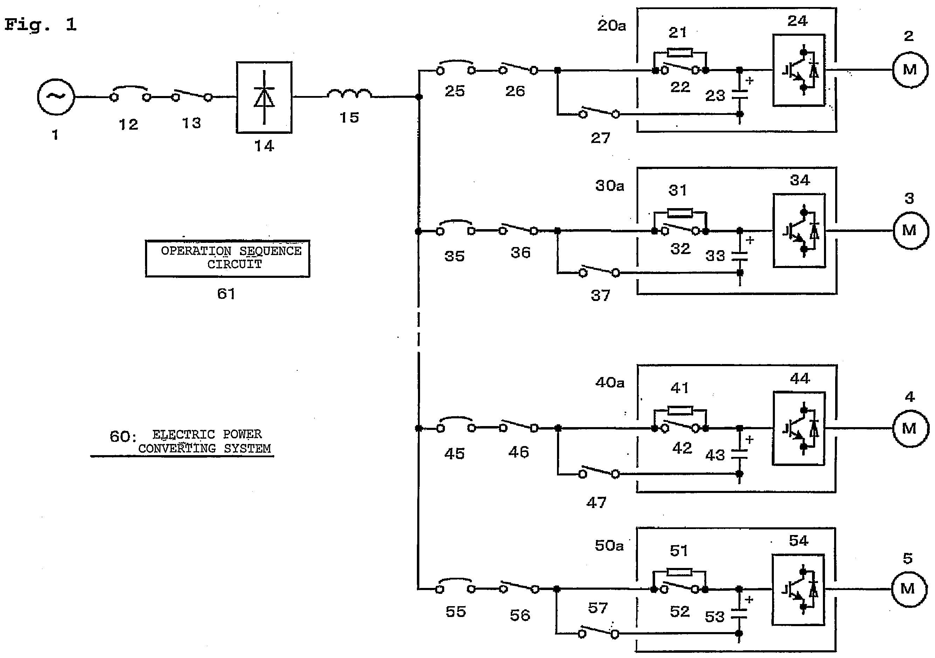

FIGURE 1 is a diagram showing the circuit configuration of an example of an electric power converting system according to the invention. In the diagram, constituents having the same functions as those of the constituents in the circuit configuration of the related electric power converting system shown in FIG. 4 are denoted with the same reference numerals and signs.

Namely, in an electric power converting system 60 shown in FIG. 1, instead of the operation sequence circuit 11 in the related electric power converting system 10, an operation sequence circuit 61 is provided. Moreover, disconnecting switches 25, 35, 45 and 55, electromagnetic contactors 26, 36, 46 and 56 and electromagnetic contactors 27, 37, 47 and 57 are additionally provided. The disconnecting switches 25, 35, 45 and 55 form the first switching circuits together with the electromagnetic contactors 26, 36, 46 and 56, respectively. The electromagnetic contactors 27, 37, 47 and 57 form the second switching circuits together with charging current suppressing resistors 21, 31, 41 and 51 provided in inverter units 20a, 30a, 40a and 50a, respectively. In addition, the inverter units 20a, 30a, 40a and 50a have capacitors 23, 33, 43 and 53, respectively, provided with terminals on their respective negative potential sides. To each of the negative potential sides terminals, a connecting wire is connected, the other end of which is externally pulled out to be connected to each of the electromagnetic contactors 27, 37, 47 and 57.

In the electric power converting system 60 according to the invention shown in FIG. 1, in a normal operation, all of a master disconnecting switch 12, an electromagnetic contactor 13, the disconnecting switches 25, 35, 45 and 55, the electromagnetic contactors 26, 36, 46 and 56 and electromagnetic contactors 22, 32, 42 and 52 are brought into closed states.

However, when the capacitors 23, 33, 43 and 53 in the inverter units 20a, 30a, 40a and 50a, respectively, are not charged like in the case such as that immediately after turning on the power, a large inrush current is to flow in each of the inverter units 20a, 30a, 40a and 50a. Therefore, for avoiding this, the inverter units 20a, 30a, 40a and 50a are made started as follows. First, with the electromagnetic contactors 22, 32, 42 and 52 brought into opened states, the capacitors 23, 33, 43 and 53 are charged through charging current suppressing resistors 21, 31, 41 and 51, respectively, to thereby suppress respective inrush currents to flow. Thereafter, with voltages across the capacitors 23, 33, 43 and 53 exceeding the minimum permissible input voltage V_{H}, the electromagnetic contactors 22, 32, 42 and 52 are made closed, by which the charging current suppressing resistors 21, 31, 41 and 51 are short-circuited for making the electric power converting system 60 carry out a normal operation.

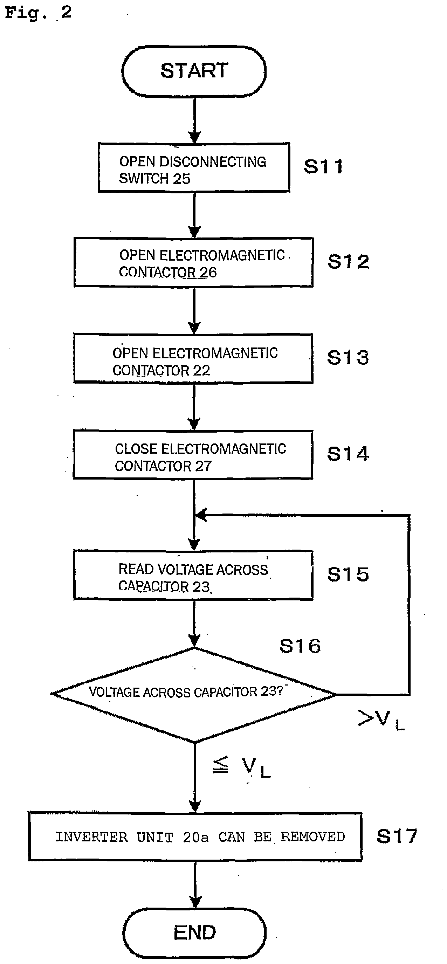

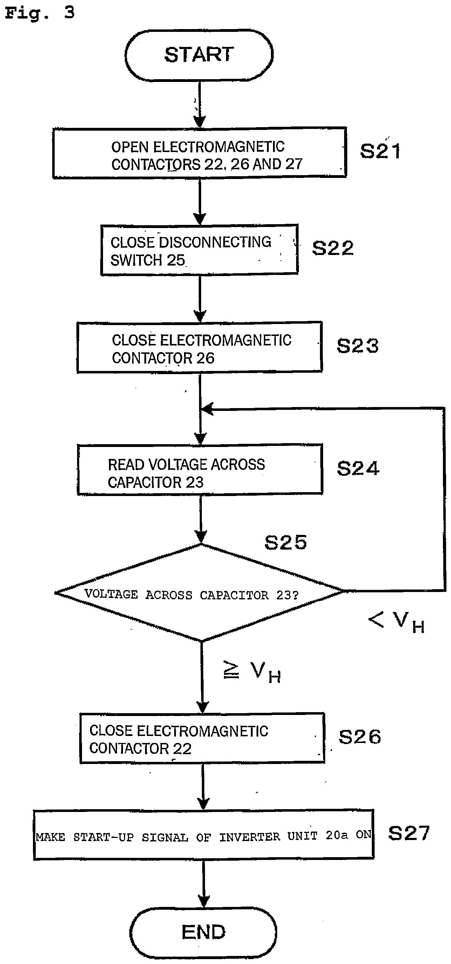

Suppose that in the electric power converting system 60 in normal operation, the inverter unit 20a, for example, of the inverter units 20a, 30a, 40a and 50a in operation causes failure to bring the operation of the inverter unit 20a into a state of being stopped. With respect to the operation at this time for replacing the failed inverter unit 20a by an inverter unit capable of carrying out a normal operation will be explained in the following with reference to flow charts shown in FIG. 2 and FIG. 3.

FIGURE 2 is a flowchart illustrating the steps of a preliminary operation in removing the failed inverter unit 20a in the electric power converting system 60 shown in FIG. 1.

Namely, in FIG.2, in the electric power converting system 60 made to be in operation by the normal inverter units 30a, 40a and 50a, the disconnecting switch 25, normally in a closed state, is made opened (step S11) to bring the electric power converting system 60 into a state in which no output voltage of the converter 14 is applied to the inverter unit 20a.

In the next, by an instruction from the operation sequence circuit 61, the electromagnetic contactor 26 is brought into an opened state (step S12) and, along with this, the electromagnetic contactors 22 is brought into an opened state (step S13).

Following this, by an instruction from the operation sequence circuit 61, the electromagnetic contactor 27, normally being in an opened state, is made closed (step S14), by which the second switching circuit (discharging circuit of the capacitor 23) is formed with the path of the positive potential side of the capacitor 23 → the charging current suppressing resistor 21 → the contact point of the electromagnetic contactor 27 → the negative potential side of the capacitor 23.

Subsequent to this, by an instruction from the operation sequence circuit 61, a voltage across the capacitor 23 is measured when the charges remained in the capacitor 23 are being gradually discharged through the above explained path (step S15). Through the measurement, monitoring is carried out as to whether or not the voltage across the capacitor 23 is lowered to be equal to or less than the voltage V_{L} previously set as the voltage at which the replacement operation can be safely carried out (step S16). When the monitored voltage exceeds the voltage V_{L}, the operation returns to step S15. Moreover, when the monitored voltage is equal to or less than the voltage V_{L}, it is decided that the voltage across the capacitor 23 is sufficiently lowered and the operation is shifted to step S17 to inform externally that the inverter unit 20a is in a removable state.

With the steps illustrated by the flow chart explained above, the failed inverter unit 20a can be safely removed without stopping the electric power converting system 60 in operation by the normal inverter units 30a, 40a and 50a. At this time, by forcing the charges in the capacitor 23 to discharge with the use of the charging current suppressing resistor 21 which is normally provided in the inverter unit 20a, a discharging time is shortened to make it possible to shorten the time required for the work of replacing the failed inverter unit 20a with a normal one.

In addition, the functions in step S15 and step S16 shown in FIG. 2 can be replaced by the operation of a timer in which a time, elapsing from the instant when the electromagnetic contactor 27 is closed in step S14 to the instant when the voltage across the capacitor 23 lowers to be equal to or less than the voltage V_{L}, is set as a specified standby time. In this case, mounting of a relatively expensive DC voltage detector can be omitted.

FIGURE 3 is a flowchart illustrating the steps of a preliminary operation in mounting a sound inverter unit after the removal of the failed inverter unit 20a and making the sound inverter unit start an operation in the electric power converting system 60 shown in FIG. 1.

Namely, in FIG. 3, after the sound inverter unit 20a carrying out a normal operation is mounted, the electromagnetic contactors 22, 26 and 27 are made opened (step S21) by an instruction from the operation sequence circuit 61, by which the electric power converting system 60 is brought into a state in which no output voltage of the converter 14 is suddenly applied to the inverter unit 20a.

Next, with the disconnecting switch 25 brought into a closed state (step S22), the electromagnetic contactor 26 is closed by an instruction from the operation sequence circuit 61 (step S23), by which an output voltage of the converter 14 is applied to the capacitor 23 through the charging current suppressing resistor 21.

Then, by an instruction from the operation sequence circuit 61, the voltage across the capacitor 23 is measured (step S24) when the capacitor 23 is gradually charged by the above voltage application operation for monitoring as to whether or not the measured voltage across the capacitor 23 becomes equal to or more than the previously set minimum permissible input voltage V_{H} (step S25). When the monitored voltage is less than the voltage V_{H}, the operation returns to step S24. Moreover, when the monitored voltage is equal to or more than the voltage V_{H}, it is decided that the voltage across the capacitor 23 is sufficiently increased and the operation is shifted to step S26 to close the electromagnetic contactor 22, by which the charging current suppressing resistor 21 is short-circuited to bring the inverter unit 20a into a state in which a normal DC voltage is applied thereto.

Next to this, by an instruction from the operation sequence circuit 61, a start-up signal is given to the inverter circuit 24 forming the inverter unit 20a (step S27), by which the electric power converting system 60 is restored to its normal operating condition.

In addition, the functions in step S24 and step S25 shown in FIG. 3 can be replaced by the operation of a timer in which a time, elapsing from the instant when the electromagnetic contactor 26 is closed in step S23 to the instant when the voltage across the capacitor 23 increases to be equal to or more than the voltage V_{H}, is set as a specified standby time. In this case, mounting of a relatively expensive DC voltage detector can be omitted.

While the present invention has been particularly shown and described with reference to the preferred embodiment thereof, it will be understood by those skilled in the art that the foregoing and other changes in form and details can be made therein without departing from the scope of the present invention.

## Claims

1. An electric power converting system comprising:
a plurality of inverters (20a, 30a, 40a, 50a) capable of being operated independently of one another and supplied by a common DC power supply, each of the inverters (20a, 30a, 40a, 50a) having a charging current suppressing resistor (21, 31, 41, 51) and a main circuit capacitor (23, 33, 43, 53);
a plurality of electromagnetic contactors (27, 37, 47, 57), each of the electromagnetic contactors (27, 37, 47, 57) forming with the respective main circuit capacitor (23, 33, 43, 53) a second switching circuit for discharging the respective main circuit capacitor (23, 33, 43, 53) of the respective inverter (20a, 30a, 40a, 50a) through the respective charging current suppressing resistor (21, 31, 41, 51); and
an operation sequence circuit (61) for controlling an electromagnetic contactor (26, 36, 46, 56) disposed between the common DC power supply and each of the inverters (20a, 30a, 40a, 50a);
**characterized in that:**
the electric power converting system further comprises a plurality of disconnecting switches (25, 35, 45, 55) and a plurality of electromagnetic contactors (26, 36, 46, 56), respectively, disposed between the common DC power supply and the plurality of the inverters (20a, 30a, 40a, 50a), each of the disconnecting switches (25, 35, 45, 55) forming with the respective electromagnetic contactor (26, 36, 46, 56) a first switching circuit;
each of the inverters (20a, 30a, 40a, 50a) comprises an electromagnetic contactor (22, 32, 42, 52) connected in parallel to the charging current suppressing resistor (21, 31, 41, 51) of the respective second switching circuit;
each of the main circuit capacitors (23, 33, 43, 53) is connected on one end to the respective charging current suppressing resistor (21, 31, 41, 51) and on another end to the electromagnetic contactor (27, 37, 47, 57) of the respective second switching circuit; and
the operation sequence circuit (61) is configured to control each of the electromagnetic contactors (26, 36, 46, 56) of the first switching circuit, each of the electromagnetic contactors (22, 32, 42, 52) of the inverters (20a, 30a, 40a, 50a), and each of the electromagnetic contactors (27, 37, 47, 57) of the second switching circuit; wherein
in case one of the inverters (20a, 30a, 40a, 50a) is subject to a failure and is to be removed, the electric power converting system is configured
to bring the disconnecting switch (25, 35, 45, 55) into an opened state;
to bring the electromagnetic contactor (26, 36, 46, 56) of the respective first switching circuit into an opened state for avoiding a voltage to be applied to the failed inverter (20a, 30a, 40a, 50a);
to bring the respective electromagnetic contactor (22, 32, 42, 52) of the failed inverter (20a, 30a, 40a, 50a) into an opened state; and
to bring the electromagnetic contactor (27, 37, 47, 57) of the respective second switching circuit into a closed state for discharging the respective main circuit capacitor (23, 33, 43, 53); and
in case of mounting another inverter (20a, 30a, 40a, 50a) after removal of the failed inverter (20a, 30a, 40a, 50a), the electric power converting system is configured
to bring the respective electromagnetic contactor (22, 32, 42, 52) of the mounted inverter (20a, 30a, 40a, 50a), the electromagnetic contactor (26, 36, 46, 56) of the respective first switching circuit, and the electromagnetic contactor (27, 37, 47, 57) of the respective second switching circuit into an open state for avoiding a voltage to be applied to the mounted inverter (20a, 30a, 40a, 50a);
to bring the disconnecting switch (25, 35, 45, 55) and the electromagnetic contactor (26, 36, 46, 56) of the respective first switching circuit into a closed state for charging the respective main circuit capacitor (23, 33, 43, 53) of the mounted inverter (20a, 30a, 40a, 50a) through the respective charging current suppressing resistor (21, 31, 41, 51); and
to bring the electromagnetic contactor (22, 32, 42, 52) of the mounted inverter (20a, 30a, 40a, 50a) into a closed state for short-circuiting the respective charging current suppressing resistor (21, 31, 41, 51) when the voltage across the respective main circuit capacitor (23, 33, 43, 53) is equal to or more than a second predetermined voltage (V_{H}).

2. The electric power converting system according to claim 1, wherein
in case one of the inverters (20a, 30a, 40a, 50a) is subject to a failure and is to be removed, the electric power converting system is configured to inform externally that the failed inverter (20a, 30a, 40a, 50a) is in a removable state when a voltage across the respective main circuit capacitor (23, 33, 43, 53) is equal to or less than a first predetermined voltage (V_{L}).

## Patentansprüche

1. Elektrisches Stromwandlersystem, umfassend:
eine Vielzahl von Wechselrichtern (20a, 30a, 40a, 50a), die unabhängig von einander betrieben und durch eine gemeinsame Gleichstromversorgung gespeist werden können, wobei jeder der Wechselrichter (20a, 30a, 40a, 50a) einen ladestromunterdrückenden Widerstand (21, 31, 41, 51) und einen Hauptstromkreiskondensator (23, 33, 43, 53) aufweist;
eine Vielzahl von elektromagnetischen Schützen (27, 37, 47, 57), wobei jedes der elektromagnetischen Schütze (27, 37, 47, 57) mit dem entsprechenden Hauptstromkreiskondensator (23, 33, 43, 53) einen zweiten Umschaltkreis zur Entladung des entsprechenden Hauptstromkreiskondensators (23, 33, 43, 53) des entsprechenden Wechselrichters (20a, 30a, 40a, 50a) durch den entsprechenden ladestromunterdrückenden Widerstand (21, 31, 41, 51) bildet; und
einen Betriebssequenz-Schaltkreis (61) zur Steuerung eines elektromagnetischen Schützes (26, 36, 46, 56), der zwischen der gemeinsamen Gleichstromversorgung und jedem der Wechselrichter (20a, 30a, 40a, 50a) angeordnet ist;
**dadurch gekennzeichnet, dass**
das elektrische Stromwandlersystem des Weiteren eine Vielzahl von Trennschaltern (25, 35, 45, 55) und eine Vielzahl von elektromagnetischen Schützen (26, 36, 46, 56) aufweist, die jeweils zwischen der gemeinsamen Gleichstromversorgung und der Vielzahl von Wechselrichtern (20a, 30a, 40a, 50a) angeordnet sind, wobei jeder der Trennschalter (25, 35, 45, 55) mit dem entsprechenden elektromagnetischen Schütz (26, 36, 46, 56) einen ersten Umschaltkreis bildet;
jeder der Wechselrichter (20a, 30a, 40a, 50a) einen elektromagnetischen Schütz (22, 32, 42, 52) umfasst, der mit dem ladestromunterdrückenden Widerstand (21, 31, 41, 51) des entsprechenden zweiten Umschaltkreises parallelgeschaltet ist;
jeder der Hauptstromkreiskondensatoren (23, 33, 43, 53) an einem Ende am entsprechenden ladestromunterdrückenden Widerstand (21, 31, 41, 51) und am anderen Ende am elektromagnetischen Schütz (27, 37, 47, 57) des entsprechenden zweiten Umschaltkreises angeschlossen ist; und
der Betriebssequenz-Schaltkreis (61) so konfiguriert ist, dass er jeden der elektromagnetischen Schütze (26, 36, 46, 56) des ersten Umschaltkreises, jeden der elektromagnetischen Schütze (22, 32, 42, 52) der Wechselrichter (20a, 30a, 40a, 50a) und jeden der elektromagnetischen Schütze (27, 37, 47, 57) des zweiten Umschaltkreises steuert; wobei
falls einer der Wechselrichter (20a, 30a, 40a, 50a) ausfällt und entfernt werden muss, das elektrische Stromwandlersystem so konfiguriert ist, dass es
den Trennschalter (25, 35, 45, 55) in einen geöffneten Zustand versetzt;
den elektromagnetischen Schütz (26, 36, 46, 56) des entsprechenden ersten Umschaltkreises in einen geöffneten Zustand versetzt, um zu verhindern, dass am ausgefallenen Wechselrichter (20a, 30a, 40a, 50a) eine Spannung angelegt wird;
den entsprechenden elektromagnetischen Schütz (22, 32, 42, 52) des ausgefallenen Wechselrichters (20a, 30a, 40a, 50a) in einen geöffneten Zustand versetzt; und
den elektromagnetischen Schütz (27, 37, 47, 57) des entsprechenden zweiten Umschaltkreises in einen geschlossenen Zustand zum Entladen des entsprechenden Hauptstromkreiskondensators (23, 33, 43, 53) versetzt; und
im Fall, dass ein anderer Wechselrichter (20a, 30a, 40a, 50a) nach Entfernung des ausgefallenen Wechselrichters (20a, 30a, 40a, 50a) eingesetzt wird, ist das elektrische Stromwandlersystem so konfiguriert, dass es
den entsprechenden elektromagnetischen Schütz (22, 32, 42, 52) des eingesetzten Wechselrichters (20a, 30a, 40a, 50a), den elektromagnetischen Schütz (26, 36, 46, 56) des entsprechenden ersten Umschaltkreises und den elektromagnetischen Schütz (27, 37, 47, 57) des entsprechenden zweiten Umschaltkreises in einen geöffneten Zustand versetzt, um zu verhindern, dass eine Spannung am eingesetzten Wechselrichter (20a, 30a, 40a, 50a) angelegt wird;
den Trennschalter (25, 35, 45, 55) und den elektromagnetischen Schütz (26, 36, 46, 56) des entsprechenden ersten Umschaltkreises in einen geschlossenen Zustand zur Ladung des entsprechenden Hauptstromkreiskondensators (23, 33, 43, 53) des eingesetzten Wechselrichters (20a, 30a, 40a, 50a) durch den entsprechenden ladestromunterdrückenden Widerstand (21, 31, 41, 51) versetzt; und
den elektromagnetischen Schütz (22, 32, 42, 52) des eingesetzten Wechselrichters (20a, 30a, 40a, 50a) in einen geschlossenen Zustand versetzt, um den entsprechenden ladestromunterdrückenden Widerstand (21, 31, 41, 51) kurzzuschließen, wenn die Spannung über den entsprechenden Hauptstromkreiskondensator (23, 33, 43, 53) einer zweiten vorgegebenen Spannung (V_{H}) entspricht oder diese übersteigt.

2. Elektrisches Stromwandlersystem nach Anspruch 1, wobei
falls einer der Wechselrichter (20a, 30a, 40a, 50a) ausfällt und entfernt werden muss, das elektrische Stromwandlersystem so konfiguriert ist, dass es extern darüber informiert, dass der ausgefallene Wechselrichter (20a, 30a, 40a, 50a) in einem entfernbaren Zustand ist, wenn eine Spannung über dem entsprechenden Hauptstromkreiskondensator (23, 33, 43, 53) gleich einer ersten vorgegebenen Spannung (V_{L}) ist oder geringer als diese ist.

## Revendications

1. Système de conversion de puissance électrique comprenant :
une pluralité d'onduleurs (20a, 30a, 40a, 50a) capables de fonctionner indépendamment les uns des autres et alimentés par une alimentation en courant continu commune, chacun des onduleurs (20a, 30a, 40a, 50a) ayant une résistance de suppression de courant de charge (21, 31, 41, 51) et un condensateur de circuit principal (23, 33, 43, 53) ;
une pluralité de contacteurs électromagnétiques (27, 37, 47, 57), chacun des contacteurs électromagnétiques (27, 37, 47, 57) formant, avec le condensateur de circuit principal respectif (23, 33, 43, 53), un second circuit de commutation pour décharger le condensateur de circuit principal respectif (23, 33, 43, 53) de l'onduleur respectif (20a, 30a, 40a, 50a) par l'intermédiaire de la résistance de suppression de courant de charge respective (21, 31, 41, 51) ; et
un circuit de séquence de fonctionnement (61) pour commander un contacteur électromagnétique (26, 36, 46, 56) disposé entre l'alimentation en courant continu commune et chacun des onduleurs (20a, 30a, 40a, 50a) ;
**caractérisé par le fait que** :
le système de conversion de puissance électrique comprend en outre une pluralité de commutateurs de séparation (25, 35, 45, 55) et une pluralité de contacteurs électromagnétiques (26, 36, 46, 56), respectivement, disposés entre l'alimentation en courant continu commune et la pluralité d'onduleurs (20a, 30a, 40a, 50a), chacun des commutateurs de séparation (25, 35, 45, 55) formant, avec le contacteur électromagnétique respectif (26, 36, 46, 56), un premier circuit de commutation ;
chacun des onduleurs (20a, 30a, 40a, 50a) comprend un contacteur électromagnétique (22, 32, 42, 52) monté en parallèle de la résistance de suppression de courant de charge (21, 31, 41, 51) du second circuit de commutation respectif ;
chacun des condensateurs de circuit principal (23, 33, 43, 53) est relié, sur une extrémité, à la résistance de suppression de courant de charge respective (21, 31, 41, 51) et, sur une autre extrémité, au contacteur électromagnétique (27, 37, 47, 57) du second circuit de commutation respectif ; et
le circuit de séquence de fonctionnement (61) est configuré pour commander chacun des contacteurs électromagnétiques (26, 36, 46, 56) du premier circuit de commutation, chacun des contacteurs électromagnétiques (22, 32, 42, 52) des onduleurs (20a, 30a, 40a, 50a), et chacun des contacteurs électromagnétiques (27, 37, 47, 57) du second circuit de commutation ;
dans lequel :
dans le cas où l'un des onduleurs (20a, 30a, 40a, 50a) subit une défaillance et doit être retiré, le système de conversion de puissance électrique est configuré
pour amener le commutateur de séparation (25, 35, 45, 55) à un état ouvert ;
pour amener le contacteur électromagnétique (26, 36, 46, 56) du premier circuit de commutation respectif à un état ouvert pour éviter qu'une tension soit appliquée à l'onduleur défaillant (20a, 30a, 40a, 50a) ;
pour amener le contacteur électromagnétique respectif (22, 32, 42, 52) de l'onduleur défaillant (20a, 30a, 40a, 50a) à un état ouvert ; et
pour amener le contacteur électromagnétique (27, 37, 47, 57) du second circuit de commutation respectif à un état fermé pour décharger le condensateur de circuit principal respectif (23, 33, 43, 53) ; et
dans le cas du montage d'un autre onduleur (20a, 30a, 40a, 50a) après le retrait de l'onduleur défaillant (20a, 30a, 40a, 50a), le système de conversion de puissance électrique est configuré
pour amener le contacteur électromagnétique respectif (22, 32, 42, 52) de l'onduleur monté (20a, 30a, 40a, 50a), le contacteur électromagnétique (26, 36, 46, 56) du premier circuit de commutation respectif, et le contacteur électromagnétique (27, 37, 47, 57) du second circuit de commutation respectif à un état ouvert pour éviter qu'une tension soit appliquée à l'onduleur monté (20a, 30a, 40a, 50a) ;
pour amener le commutateur de séparation (25, 35, 45, 55) et le contacteur électromagnétique (26, 36, 46, 56) du premier circuit de commutation respectif à un état fermé pour charger le condensateur de circuit principal respectif (23, 33, 43, 53) de l'onduleur monté (20a, 30a, 40a, 50a) par l'intermédiaire de la résistance de suppression de courant de charge respective (21, 31, 41, 51) ; et
pour amener le contacteur électromagnétique (22, 32, 42, 52) de l'onduleur monté (20a, 30a, 40a, 50a) à un état fermé pour court-circuiter la résistance de suppression de courant de charge respective (21, 31, 41, 51) lorsque la tension aux bornes du condensateur de circuit principal respectif (23, 33, 43, 53) est égale ou supérieure à une seconde tension prédéterminée (V_{H}).

2. Système de conversion de puissance électrique selon la revendication 1, dans lequel :
dans le cas où l'un des onduleurs (20a, 30a, 40a, 50a) subit une défaillance et doit être retiré, le système de conversion de puissance électrique est configuré pour informer à l'extérieur que l'onduleur défaillant (20a, 30a, 40a, 50a) est dans un état amovible lorsqu'une tension aux bornes du condensateur de circuit principal respectif (23, 33, 43, 53) est égale ou inférieure à une première tension prédéterminée (V_{L}).
